# EUROPEAN PATENT SPECIFICATION

(11) **EP 4 312 677 B1**
(45) Date of publication and mention of the grant of the patent: **05.03.2025**
(21) Application number: 22717659.1
(22) Date of filing: 22.03.2022
(51) Int. Cl.: A47J 31/36, A47J 31/46

(54) **BEVERAGE DISPENSING MACHINE, PARTICULARLY OF THE TYPE WITH A DRIP-STOP DEVICE**
GETRÄNKEAUSGABEMASCHINE, INSBESONDERE DES TYPS MIT TROPFSTOPPVORRICHTUNG
MACHINE DE DISTRIBUTION DE BOISSONS, EN PARTICULIER DU TYPE COMPRENANT UN DISPOSITIF ANTI-GOUTTE

(30) Priority: 23.03.2021 IT 202100006929
(43) Date of publication of application: 07.02.2024
(73) Proprietor: Componenti Vending S.p.A., 20122 Milano (IT)
(72) Inventor: VANNINI, Antonio, 57023 Cecina (IT); DITRANI, Marco, 20090 Trezzano Sul Naviglio (IT); DI DIO, Francesco, 20143 Milano (IT)
(74) Representative: Modiano, Micaela Nadia
(86) International application number: PCT/IB2022/052596
(87) International publication number: WO 2022/201015

(56) References cited:
- EP-A1- 1 459 663
- WO-A1-2011/067264
- US-A- 5 479 849
- US-A1- 2019 069 713

## Description

The present invention relates to a beverage dispensing machine, particularly of the type with a drip-stop device.

In the field of automatic machines for dispensing beverages and the like, and particularly for coffee dispensing machines, devices for managing dripping on the coffee dispensing circuits are provided in order to avoid soiling the dispensing area and/or avoid soiling the dispensing in the cup.

All this in order to provide, furthermore, a qualitatively high and clean appearance of the unit constituted by the cup and the dispensing area.

Generally, these devices comprise a three-way valve installed in the dispensing circuit so as to let air enter it downstream of the infusion chamber. Such beverage dispensing machine is disclosed in WO 2011/067264 A1.

In some beverage dispense machines, at the end of the dispensing, the residue of liquid inside the tube drains completely before the cup is removed.

However, it is important to consider that if this three-way valve is always left open one will obtain a complete outflow of the liquid residue in the tube but at the same time a generation of air bubbles during infusion will be obtained, thus ruining the appearance in the cup because of splashes.

In order to achieve proper operation it is necessary to add an automatic system for opening and closing the three-way valve only at the end of the dispensing.

These solutions of the known type are not free from drawbacks, which include the fact that the addition of the automatic system for the opening and closing of the three-way valve complicates the machine from a structural and functional point of view.

The aim of the present invention is to provide a dispensing machine, particularly but not exclusively for beverages, capable of eliminating dripping on the coffee dispensing circuits in order to avoid soiling the dispensing area, avoid soiling the dispensing in the cup and thus give a qualitatively high in-cup appearance.

Within this aim, an object of the present invention is to provide a dispensing machine with extremely compact and simple mechanics.

Another object of the present invention is to provide a dispensing machine with extremely compact and simple mechanics that is capable of managing the time required to ensure complete emptying of the dispensing system, even if the length of the tube varies during dispensing.

Another object of the present invention is to provide a dispensing machine that is capable of giving the greatest assurances of reliability and safety in use.

Another object of the present invention is to provide a dispensing machine that can be provided with per se known technologies and thus has low provision costs.

This aim and objects mentioned are achieved by a beverage dispensing machine according to claim 1.

Further characteristics and advantages of the invention will become better apparent from the description of a preferred but not exclusive embodiment of a beverage dispensing machine, particularly of the type with a drip-stop device, illustrated by way of non-limiting example with the aid of the accompanying drawings, wherein:
Figure 1 is a perspective view of a dispensing machine according to the present invention with the dispensing assembly in its loading and unloading position;
Figure 2 is a partially exploded perspective view of the dispensing machine shown in Figure 1;
Figure 3 is a sectional perspective view, taken along a first longitudinal plane, of the dispensing machine shown in the preceding figures;
Figure 4 is a sectional view, taken along said first longitudinal plane, of the dispensing machine shown in the preceding figures;
Figure 5 is a sectional view, taken along a second longitudinal plane, of the dispensing machine shown in the preceding figures;
Figure 6 is an enlarged-scale view of a detail of Figure 5;
Figure 7 is a sectional view, taken along said first longitudinal plane, of the dispensing machine shown in the preceding figures with the dispensing assembly in its dispensing position;
Figure 8 is a sectional view, taken along said second longitudinal plane, of the dispensing machine shown in Figure 7;
Figure 9 is an enlarged-scale view of a detail of Figure 8;
Figure 10 is a sectional view of the dispensing machine shown in the preceding figures with the dispensing assembly in a position that is intermediate between said dispensing position and said loading and unloading position;
Figure 11 is a sectional view, taken along said second longitudinal plane, of the dispensing machine shown in Figure 10;
Figure 12 is an enlarged-scale view of a detail of Figure 11.

With reference to the figures, the beverage dispensing machine, particularly of the type with a drip-stop device, generally designated by the reference numeral 1, is composed of a plurality of mechanical, hydraulic and electrical assemblies associated with a supporting frame enclosed in an external body constituted by multiple shells made of plastic material.

In greater detail, the dispensing machine 1 of the present invention comprises an infusion assembly 2 which forms an infusion chamber 3, which can have a cylindrical shape with a circular base, and in which a food substance 4 from which an infusion is to be obtained is to be arranged.

In the proposed embodiment, the dispensing machine 1 operates with a food substance 4, for example coffee powder. However, it is not excluded that said machine might perform infusions of another kind, such as tea and herbal teas of various types, as well as any other food substance suitable to obtain infusions and, by means of appropriate modifications to the mechanics of the machine, in other formats, such as pods and capsules.

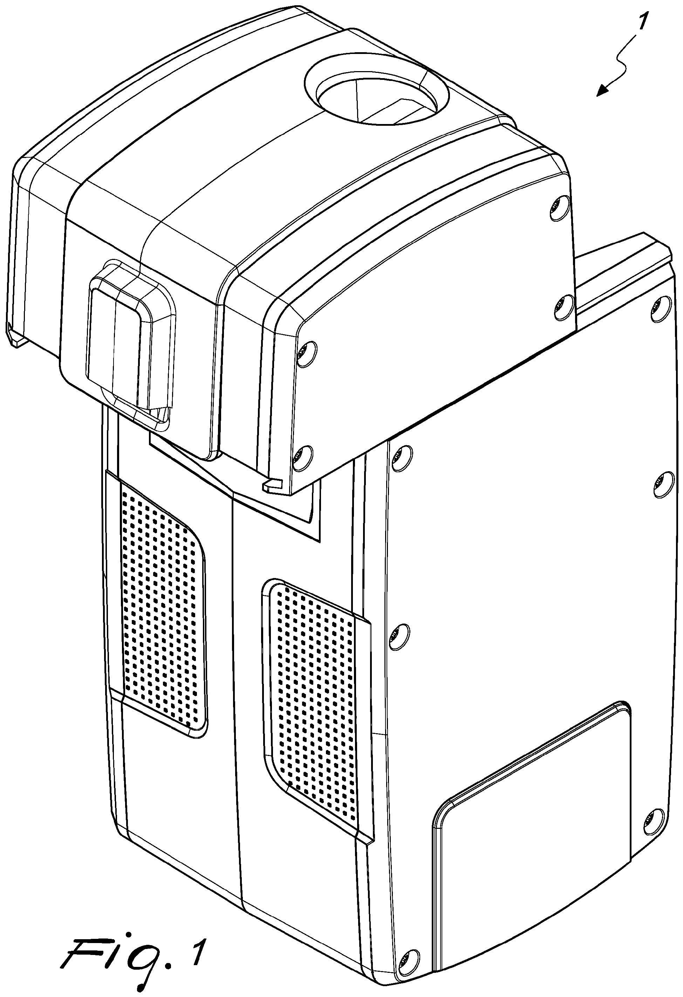

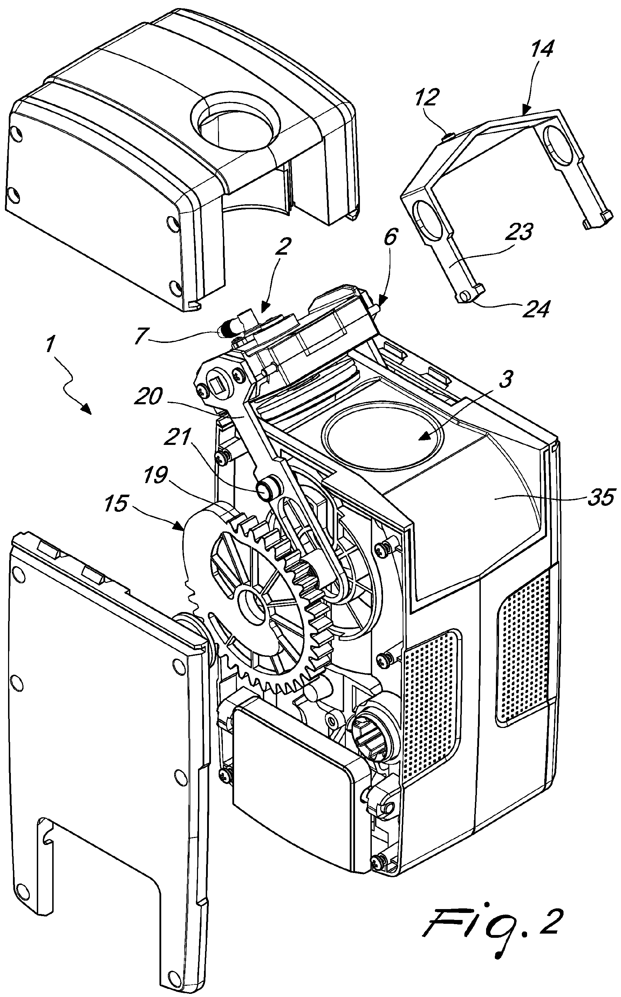

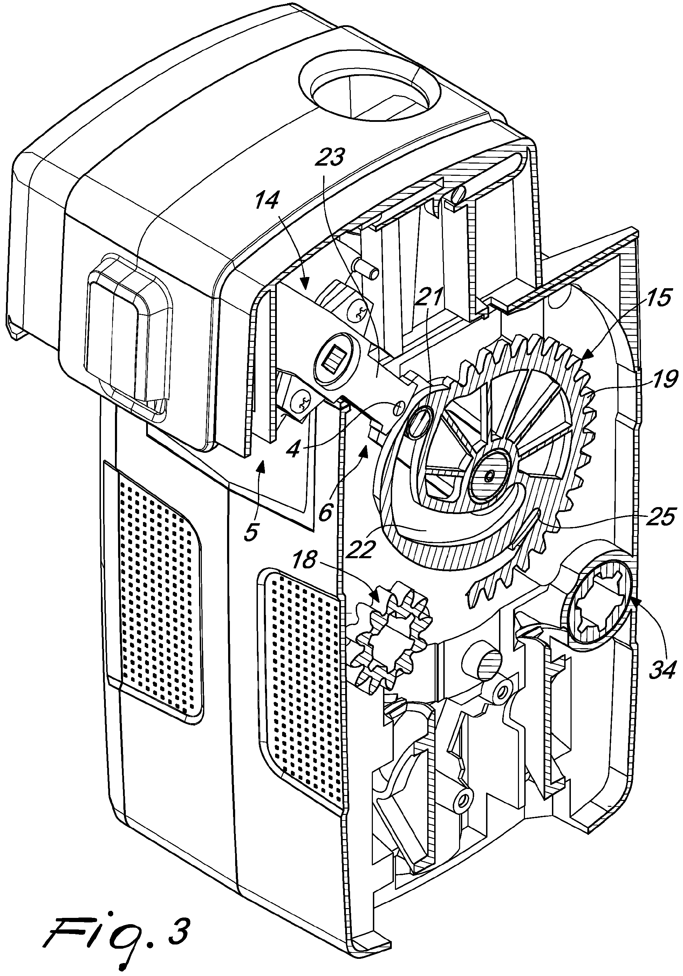

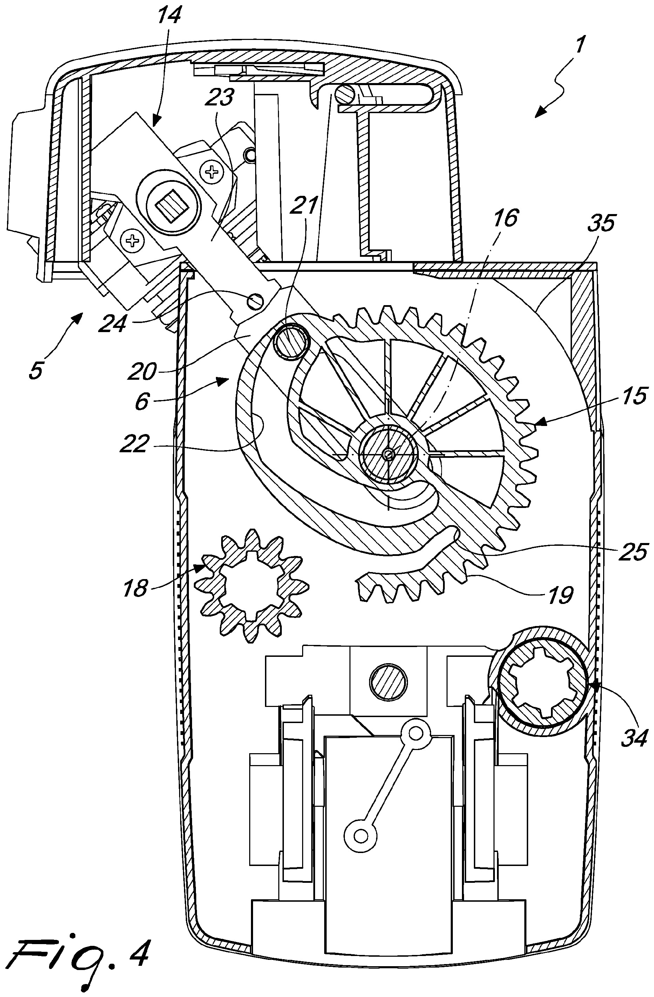

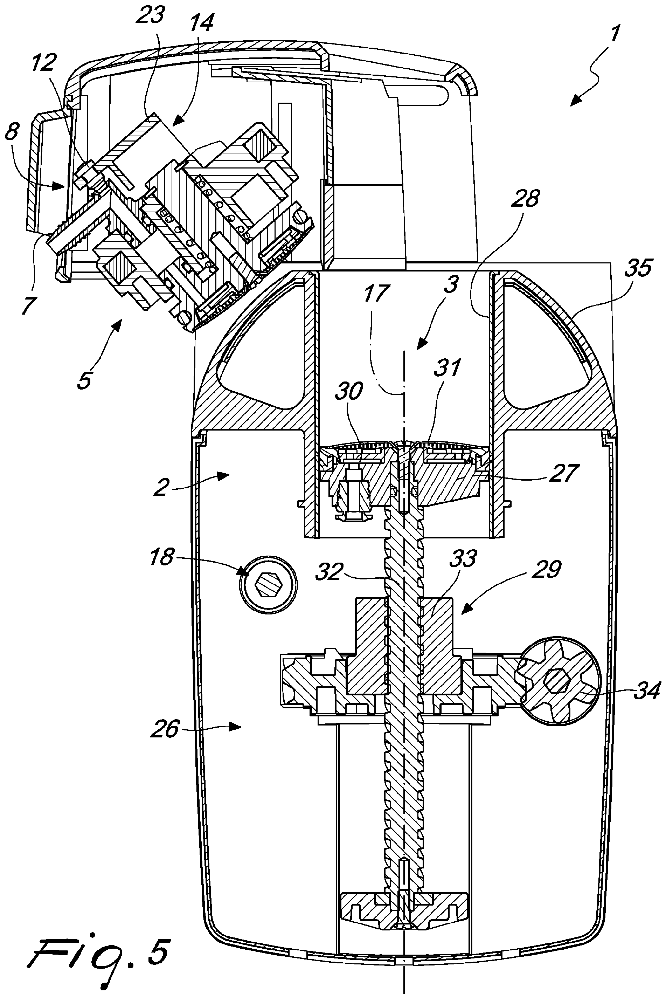

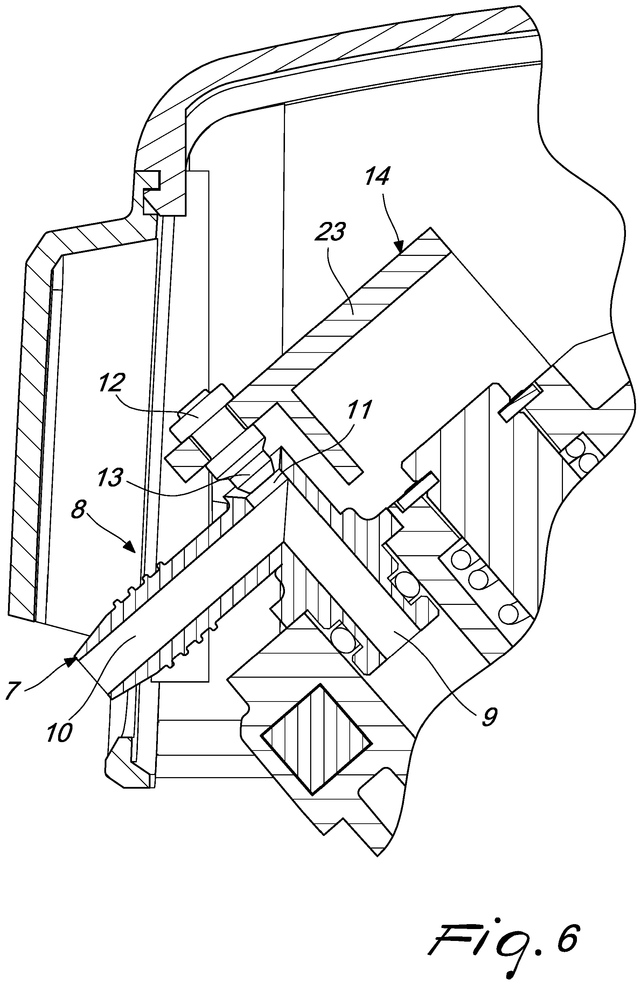

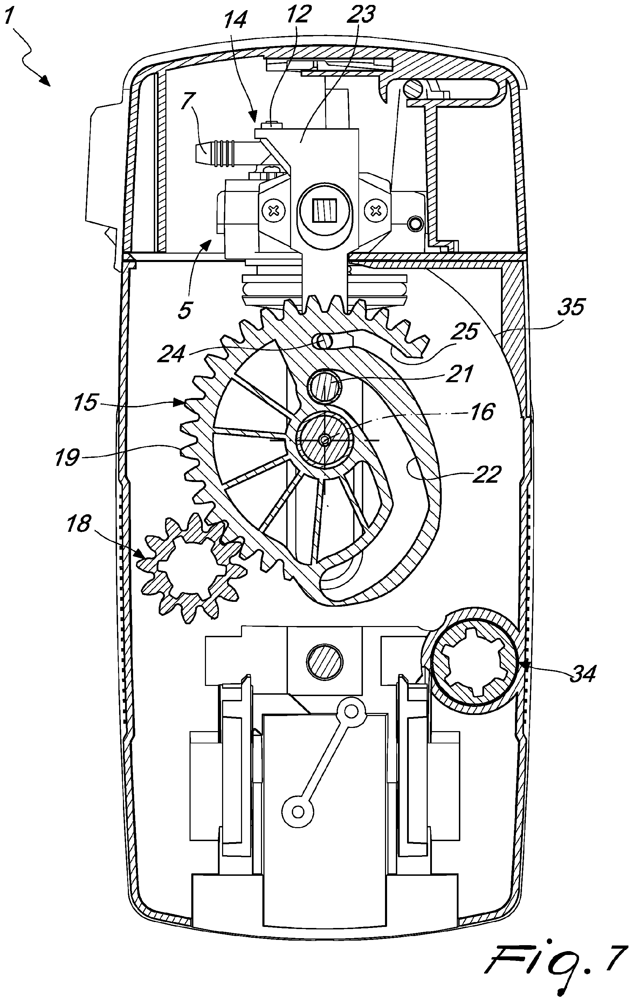

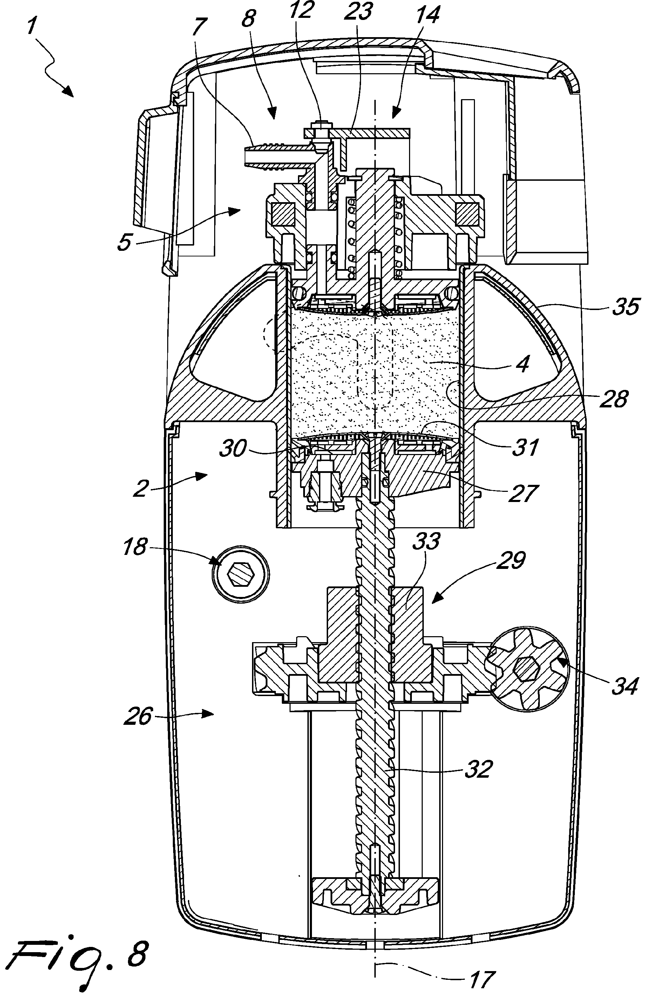

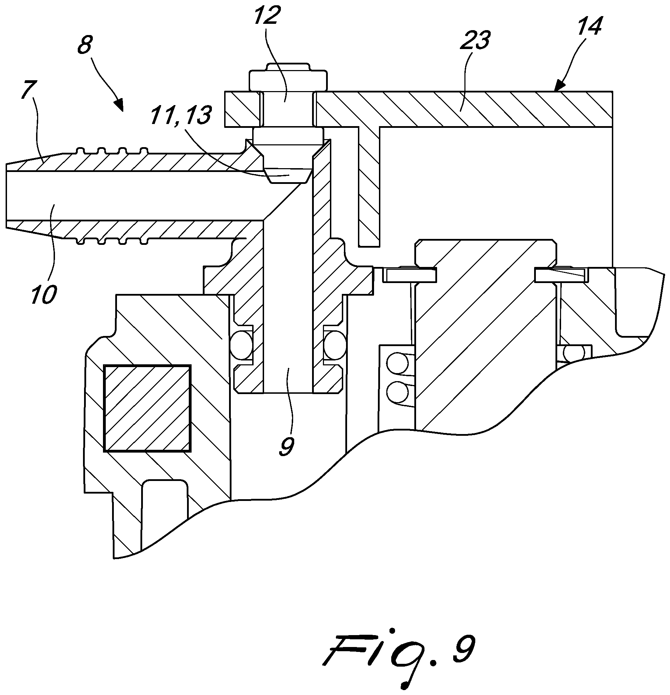

The dispensing machine 1 of the present invention further comprises a dispensing assembly 5 which is arranged so as to close the infusion chamber 3 and can move by virtue of first kinematic means 6 between a loading and unloading position, shown in Figures 1 to 6, in which the dispensing assembly 5 is spaced from the infusion chamber 3 in such a manner as to leave free access thereto, and a dispensing position, shown in Figures 7 to 9, in which the dispensing assembly 5 is arranged so as to close the infusion chamber 3.

According to the present invention, the dispensing assembly 5 comprises a dispensing nozzle 7 which is provided with a three-way valve 8, in which the first way 9 communicates with the infusion chamber 3, with the dispensing assembly 5 arranged in the dispensing position, a second way 10 communicates with the dispensing nozzle 7 and a third way 11 communicates with the air of the external environment.

According to the present invention, the third way 11 is provided with a drip-stop closure 12, which can have an abutment portion 13 with a substantially frustum-like shape, which can move by virtue of second kinematic means 14 between an open position, in which the third way 11 is free for the entry of air into the dispensing circuit, and a closure position, in which the third way 11 is obstructed by the drip-stop closure 12.

According to the invention, the second kinematic means 14 are kinematically associated with the first kinematic means 6 for the synchronous movement of the drip-stop closure 12 with the dispensing assembly 5 between their respective positions.

According to the present invention, an actuation wheel 15 is provided which is functionally associated with the first and second kinematic means 6 and 14.

Such actuation wheel 15 has an axis of rotation 16 that is substantially transverse to the longitudinal axis 17 of the infusion chamber 3 and is associated with first motor means 18 by means of a toothed profile 19 formed on a portion of its perimetric edge.

The dispensing assembly 5 comprises a primary frame 20 which can be provided with a substantially fork-like shape, which is rotatably connected with the infusion chamber 3 about the rotation axis 16 of the actuation wheel for the movement of the dispensing assembly 5 from the loading and unloading position to the dispensing position and vice versa.

According to the present invention, the first kinematic means 6 comprise at least one first actuation pin 21 which is integrally associated with the primary frame 20, for example at a lateral stem thereof, and is shaped for its engagement in a first cam-like profile 22 formed on the actuation wheel 15.

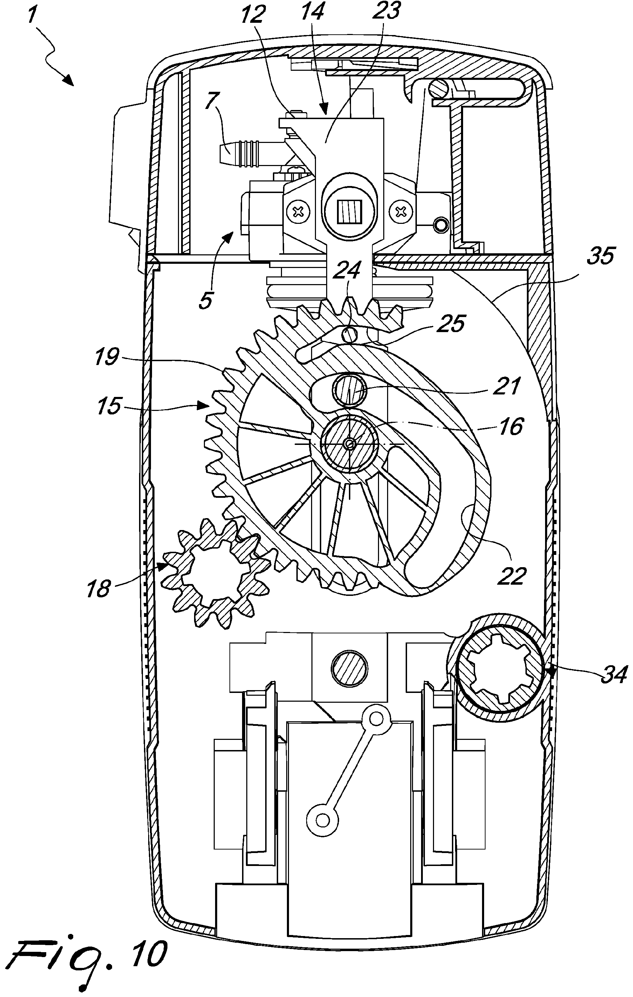

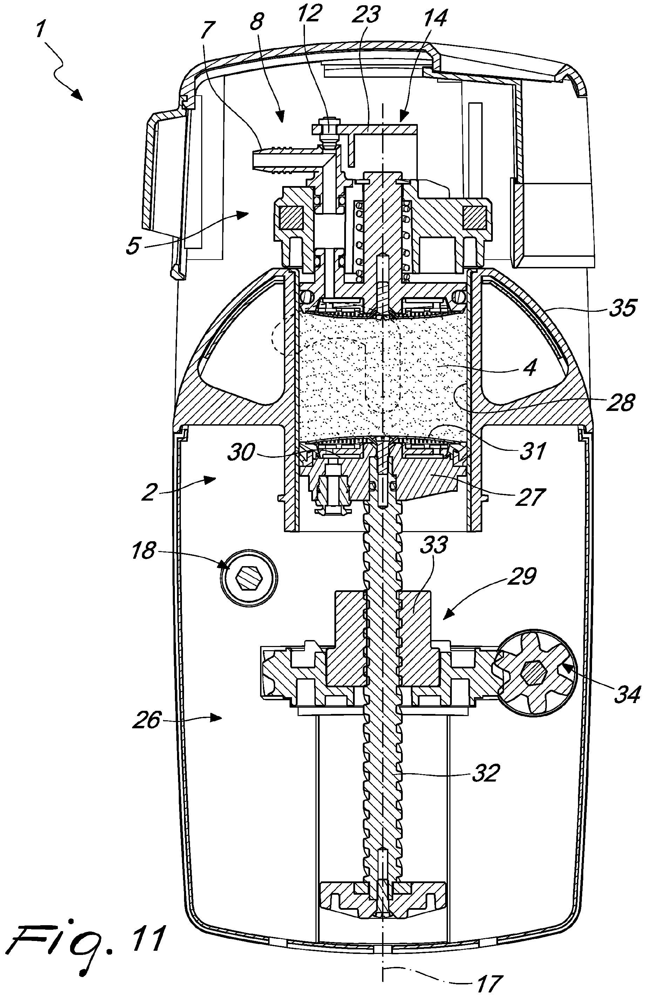

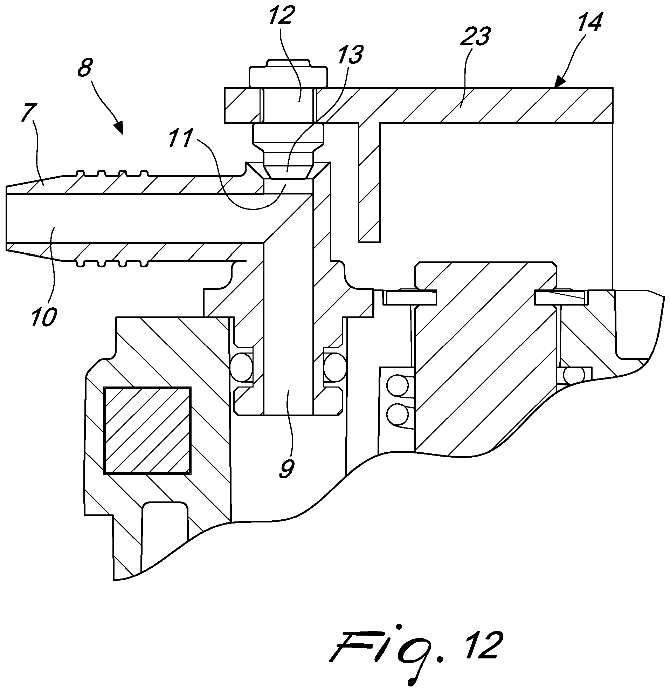

According to the present invention, the first cam-like profile 22 has a shape that is radially and circumferentially variable with respect to the rotation axis 16 of the actuation wheel 15, with a first portion that is responsible for the movement of the dispensing assembly 5 between the loading and unloading position and an intermediate position, shown in Figures 10 to 12, in which the dispensing assembly 5 is arranged above and stationary in the infusion chamber 3, and with a second portion that is responsible for the movement of the dispensing assembly 5 between said intermediate position and the dispensing position.

Furthermore, the dispensing assembly 5 comprises a secondary frame 23, also having a fork-like shape, which is slidingly associated with the primary frame 20 along a direction that is radial with respect to the rotation axis 16 and supports the drip-stop closure 12 for its movement from the open position to the closed position and vice versa.

Advantageously, the second kinematic means 14 comprise at least one second actuation pin 24 which is integrally associated with the secondary frame 23, at a lateral stem thereof, and is shaped for its engagement in a second cam-like profile 25 formed on the actuation wheel 15.

Conveniently, the second cam-like profile 25 also has a shape that is radially and circumferentially variable with respect to the rotation axis 16 of the actuation wheel 15 for the movement of the drip-stop closure 12 from the open position to the closed position and vice versa.

Furthermore, the dispensing machine 1 comprises a hydraulic assembly, not shown for the sake of graphic simplicity and not described in detail since it is per se known, which is hydraulically connected to the infusion chamber 3 to send water into it and to consequently obtain the infusion by means of the passage of the dispensed water through the food substance 4.

However, considering the nature of the proposed embodiment regarding the dispensing machine 1 according to the invention, the hydraulic assembly comprises at least one high-pressure pump and a heater for sending hot water into the infusion chamber 3.

To complete the dispensing machine 1, in the proposed embodiment such machine also comprises a presser assembly 26 adapted to compress the food substance 4 contained in the infusion chamber 3.

More specifically, the presser assembly 26 comprises a presser body 27 which is slidingly associated with the infusion chamber 3 along its longitudinal axis 17 so as to define the bottom of the infusion chamber 3.

Conveniently, the presser body 27 can slide in the infusion chamber 3 so as to form a seal with the side walls 28 of the infusion chamber 3 between a top dead center and a bottom dead center by virtue of lifting and lowering means 29 and forms inside it a distribution chamber 30 which communicates hydraulically with the hydraulic assembly and is closed on the side directed toward the internal volume of the infusion chamber 3 by a perforated plate 31 for the outflow of the water in the infusion chamber 3 through the holes of the perforated plate 31.

In greater detail, the lifting and lowering means 29 comprise a worm screw 32 which is associated, at one of its ends, with the presser body 27 and is associated with a motorized female thread 33 which is integral in translation with the infusion chamber 3.

The motorized female thread 33 is kinematically associated with second motor means 34.

The operation of the dispensing machine 1 according to the invention is described hereinafter.

With particular reference to Figures 1 to 6, the dispensing assembly 5 is arranged in its loading and unloading position and the infusion chamber 3 has an open top with the presser body 27 arranged in its bottom dead center position.

In this configuration it is possible to proceed with the loading of the food substance 4 into the infusion chamber 3.

Once loading has occurred, the dispensing machine 1 is started automatically and, by means of the first motor means 18, the actuation wheel 15 is turned.

During this rotation, the cam-like profiles 22 and 25 engage the actuation pins 21 and 24, respectively.

More specifically, the progressive engagement of the first cam-like profile 22 with the first actuation pin 21 initially leads to the rotation of the dispensing assembly 5 until it is positioned above the infusion chamber 3 and, subsequently, to the lowering thereof so as to close the infusion chamber 3, arranging it in its dispensing position.

At the same time, the progressive engagement of the second cam-like profile 25 with the second actuation pin 24 leads to the switching of the drip-stop closure 12 to its closed position.

Once this configuration, shown in Figures 7 to 9, has been reached, one can proceed with the dispensing of the infusion.

More specifically, initially the presser assembly 26 acts on the food substance 4 that is present in the infusion chamber 3 by means of the presser body 27 moved by the worm screw 32 and subsequently the hydraulic assembly heats and pressurizes the water which, filtering through the infusion chamber 3, exits from the dispensing nozzle 7.

During all this, the drip-stop closure 12 remains arranged in its closed position.

Once dispensing has been completed, the actuation wheel 15 is moved in the direction opposite to the preceding one.

With particular reference to Figures 10 to 12, this rotation of the actuation wheel 15 initially entails only the opening of the drip-stop closure 12.

In this manner, air enters the dispensing circuit by means of the three-way valve 8, emptying said circuit of the amount of infusion present therein.

At this point, the actuation wheel 15 continues in its rotation, positioning the dispensing assembly in the initial position.

With the infusion chamber 3 open, the presser assembly 26 can slide its presser body 27 to the top dead center position, entailing the discharge of the food substance 4 by means of the chute 35.

In practice it has been found that the beverage dispensing machine, particularly of the type with anti-drip device according to the present invention, achieves the intended aim and objects, since it allows to eliminate dripping on coffee dispensing systems in order to avoid soiling the dispensing area, avoid soiling the dispensing in the cup and thus give a qualitatively high in-cup appearance.

All this by means of a series of automatic movements of the components involved, integrated in the normal movement of the infusion system.

Another advantage of the dispensing machine according to the present invention is that it automatically manages the time needed to guarantee complete emptying, even if the length of the dispensing tube varies, this being irrelevant to its operation.

The beverage dispensing machine, particularly of the type with a drip-stop device, thus conceived is susceptible of numerous modifications and variations, all of which are within the scope of the accompanying claims.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A beverage dispensing machine (1), particularly of the type with a drip-stop device, comprising:
- an infusion assembly (2) which forms an infusion chamber (3), in which a food substance (4) from which an infusion is to be obtained is to be arranged;
- a dispensing assembly (5) which is arranged so as to close said infusion chamber (3) and can move by virtue of first kinematic means (6) between a loading and unloading position, in which said dispensing assembly (5) is spaced from said infusion chamber (3) in such a manner as to leave free access to said infusion chamber (3), and a dispensing position, in which said dispensing assembly (5) is arranged so as to close said infusion chamber (3);
- a hydraulic assembly, which is hydraulically connected to said infusion chamber (3) to send water into said infusion chamber (3) in order to obtain said infusion by means of the passage of said water through said food substance;
said dispensing assembly (5) comprising a dispensing nozzle (7) said beverage dispensing machine (1) being **characterized in that** the dispensing nozzle (7) is provided with a three-way valve (8), in which a first way (9) communicates with said infusion chamber (3), with said dispensing assembly (5) arranged in said dispensing position, a second way (10) communicates with said dispensing nozzle (7) and a third way (11) communicates with the air of the external environment; said third way (11) being provided with a drip-stop closure (12) which can move by virtue of second kinematic means (14) between an open position, in which said third way (11) is free for the entry of air into the dispensing circuit, and a closure position, in which said third way (11) is obstructed by said drip-stop closure (12);
said second kinematic means (14) are kinematically associated with said first kinematic means (6) in a manner to provide a synchronous movement of said drip-stop closure (12) with said dispensing assembly (5) between their respective said positions, said dispensing machine (1) comprising an actuation wheel (15) which is functionally associated with said first and second kinematic means (14); said actuation wheel (15) having an axis of rotation (16) that is substantially transverse to the longitudinal axis (17) of said infusion chamber (3) and being associated with first motor means (18), said dispensing assembly (5) comprising a primary frame (20) which is rotatably connected with said infusion chamber (3) about said rotation axis (16) of said actuation wheel for the movement of said dispensing assembly (5) from said loading and unloading position to said dispensing position and vice versa, said first kinematic means (6) comprise at least one first actuation pin (21) which is integrally associated with said primary frame (20) and is shaped for its engagement in a first cam-like profile (22) formed on said actuation wheel (15); said first cam-like profile (22) having a shape that is radially and circumferentially variable with respect to said rotation axis (16) of said actuation wheel (15), with a first portion that is responsible for the movement of said dispensing assembly (5) between said loading and unloading position and an intermediate position, in which said dispensing assembly (5) is arranged above and inside said infusion chamber, and with a second portion that is responsible for the movement of said dispensing assembly (5) between said intermediate position and said dispensing position.

2. The beverage dispensing machine (1) according to claim 1, **characterized in that** said dispensing machine (1) further comprises a presser assembly (26) adapted to compress said food substance (4) contained in said infusion chamber (3), said presser assembly (26) comprising a presser body (27) which is slidingly associated with said infusion chamber (3) along said longitudinal axis (17) so as to define the bottom of said infusion chamber (3); said presser body (27) being able to slide in said infusion chamber (3) so as to form a seal with the side walls (28) of said infusion chamber (3) between a top dead center and a bottom dead center by virtue of lifting and lowering means (29); said presser body (27) forming a distribution chamber (30) which communicates hydraulically with said hydraulic assembly and is closed on a side directed toward the internal volume of said infusion chamber (3) by a perforated plate (31) for the outflow of said water in said infusion chamber (3) through the holes of said perforated plate (31), said lifting and lowering means (29) comprising a worm screw (32) which is associated, at one of its ends, with said presser body (27) and is associated with a motorized female thread (33) which is integral in translation with said infusion chamber (3); said motorized female thread (33) being kinematically associated with second motor means (34).

3. The dispensing machine (1) according to claim 1, **characterized in that** it comprises a presser assembly (26) adapted to compress said food substance (4) contained in said infusion chamber (3), said presser assembly (26) comprising a presser body (27) which is slidingly associated with said infusion chamber (3) along said longitudinal axis (17) so as to define the bottom of said infusion chamber (3); said presser body (27) being able to slide in said infusion chamber (3) so as to form a seal with the side walls (28) of said infusion chamber (3) between a top dead center and a bottom dead center by virtue of lifting and lowering means (29); said presser body (27) forming a distribution chamber (30) which communicates hydraulically with said hydraulic assembly and is closed on the side directed toward the internal volume of said infusion chamber (3) by a perforated plate (31) for the outflow of said water in said infusion chamber (3) through the holes of said perforated plate (31), said lifting and lowering means (29) comprising a worm screw (32) which is associated, at one of its ends, with said presser body (27) and is associated with a motorized female thread (33) which is integral in translation with said infusion chamber (3); said motorized female thread (33) being kinematically associated with second motor means (34).

4. The dispensing machine (1) according to one or more of the preceding claims, **characterized in that** said dispensing assembly (5) comprises a secondary frame (23) which is slidingly associated with said primary frame (20), along a direction that is radial with respect to said rotation axis (16), and supports said drip-stop closure (12) for its movement from said open position to said closed position and vice versa.

5. The dispensing machine (1) according to one or more of the preceding claims, **characterized in that** said second kinematic means (14) comprise at least one second actuation pin (24) which is integrally associated with said secondary frame (23) and is shaped for its engagement in a second cam-like profile (25) formed on said actuation wheel (15); said second cam-like profile (25) having a shape that is radially and circumferentially variable with respect to said rotation axis (16) of said actuation wheel (15) for the movement of said drip-stop closure (12) from said open position to said closed position and vice versa.

6. The dispensing machine (1) according to one or more of the preceding claims, **characterized in that** said hydraulic assembly comprises a high-pressure pump and a heater for sending hot water into said infusion chamber (3).

## Patentansprüche

1. Eine Getränkeausgabemaschine (1), insbesondere vom Typ mit Tropfstoppvorrichtung, die Folgendes umfasst:
- einen Aufgussaufbau (2), der eine Aufgusskammer (3) bildet, in welcher eine Lebensmittelsubstanz (4), aus welcher ein Aufguss gewonnen werden soll, anzuordnen ist;
- einen Ausgabeaufbau (5), der angeordnet ist, um die Aufgusskammer (3) zu verschließen, und der sich mit Hilfe erster kinematischer Mittel (6) zwischen einer Lade- und Entladeposition, in welcher der Ausgabeaufbau (5) von der Aufgusskammer (3) auf solche Art beabstandet ist, dass freier Zugang zu der Aufgusskammer (3) besteht, und einer Ausgabeposition bewegen kann, in welcher der Ausgabeaufbau (5) angeordnet ist, um die Aufgusskammer (3) zu verschließen;
- einen hydraulischen Aufbau, der hydraulisch mit der Aufgusskammer (3) verbunden ist, um Wasser in die Aufgusskammer (3) zu befördern, um mit Hilfe des Durchlaufs des Wassers durch die Lebensmittelsubstanz den Aufguss zu erhalten;
wobei der Ausgabeaufbau (5) eine Ausgabedüse (7) umfasst, wobei die Getränkeausgabemaschine (1) **dadurch gekennzeichnet ist, dass** die Ausgabedüse (7) mit einem Drei-Wege-Ventil (8) ausgestattet ist, wobei ein erster Weg (9) mit der Aufgusskammer (3) kommuniziert, wenn der Ausgabeaufbau (5) in der Ausgabeposition angeordnet ist, ein zweiter Weg (10) mit der Ausgabedüse (7) kommuniziert und ein dritter Weg (11) mit der Luft der äußeren Umgebung kommuniziert; wobei der dritte Weg (11) mit einem Tropfstoppverschluss (12) ausgestattet ist, der sich mit Hilfe zweiter kinematischer Mittel (14) zwischen einer offenen Position, in welcher der dritte Weg (11) für den Eintritt von Luft in den Ausgabekreis frei ist, und einer Verschlussposition bewegen kann, in welcher der dritte Weg (11) durch den Tropfstoppverschluss (12) verschlossen ist;
die zweiten kinematischen Mittel (14) sind kinematisch mit den ersten kinematischen Mitteln (6) auf eine Art verbunden, die geeignet ist, eine synchrone Bewegung des Tropfstoppverschlusses (12) mit dem Ausgabeaufbau (5) zwischen ihren jeweiligen Positionen auszulösen, wobei die Ausgabemaschine (1) ein Antriebsrad (15) umfasst, das funktionell mit den ersten und zweiten kinematischen Mitteln (14) verbunden ist; wobei das Antriebsrad (15) eine Drehachse (16) hat, die im Wesentlichen quer zu der Längsachse (17) der Aufgusskammer (3) und mit ersten Motormitteln (18) verknüpft ist, wobei der Ausgabeaufbau (5) einen primären Rahmen (20) umfasst, welcher drehbar um die Drehachse (16) des Antriebsrades mit der Aufgusskammer (3) verbunden ist zur Bewegung des Ausgabeaufbaus (5) aus der Lade- und Entladeposition in die Ausgabeposition und umgekehrt; wobei die ersten kinematischen Mittel (6) mindestens einen ersten Antriebsstift (21) umfassen, der integral mit dem primären Rahmen (20) verbunden und für seinen Eingriff in ein erstes nockenartiges Profil (22) geformt ist, das an dem Antriebsrad (15) geformt ist; wobei das erste nockenartige Profil (22) eine Form hat, die radial und im Umfangsrichtung mit Bezug auf die Drehachse (16) des Antriebsrades (15) veränderlich ist, mit einem ersten Abschnitt, der für die Bewegung des Ausgabeaufbaus (5) zwischen der Lade- und Entladeposition und einer Zwischenposition zuständig ist, in welcher der Ausgabeaufbau (5) über und in der Aufgusskammer angeordnet ist, und mit einem zweiten Abschnitt, der für die Bewegung des Ausgabeaufbaus (5) zwischen der Zwischenposition und der Ausgabeposition zuständig ist.

2. Die Getränkeausgabemaschine (1) gemäß Anspruch 1, **dadurch gekennzeichnet, dass** die Ausgabemaschine (1) weiter einen Pressaufbau (26) umfasst, ausgebildet, um die Lebensmittelsubstanz (4) in der Aufgusskammer (3) zu komprimieren, wobei der Pressaufbau (26) einen Presskörper (27) umfasst, welcher verschiebbar entlang der Längsachse (17) mit der Aufgusskammer (3) verbunden ist, um den Boden der Aufgusskammer (3) zu bestimmen; wobei der Presskörper (27) in der Lage ist, in der Aufgusskammer (3) zu gleiten, um mit Hilfe von Anhebungs- und Absenkungsmitteln (29) eine Abdichtung mit den Seitenwänden (28) der Aufgusskammer (3) zwischen einem oberen Totpunkt und einem unteren Totpunkt zu bilden; wobei der Presskörper (27) eine Verteilkammer (30) bildet, die hydraulisch mit dem hydraulischen Aufbau kommuniziert und auf einer dem inneren Volumen der Aufgusskammer (3) zugewandten Seite durch eine perforierte Platte (31) verschlossen ist zwecks Ausströmens des Wassers in der Aufgusskammer (3) durch die Löcher der perforierten Platte (31); wobei die Anhebungs- und Absenkungsmittel (29) eine Schneckenschraube (32) umfassen, welche an einem ihrer Enden mit dem Presskörper (27) verbunden und mit einem motorisierten Innengewinde (33) verknüpft ist, welches integral in der Translation mit der Aufgusskammer (3) ist; wobei das motorisierte Innengewinde (33) kinematisch mit zweiten Motormitteln (34) verknüpft ist.

3. Die Ausgabemaschine (1) gemäß Anspruch 1, **dadurch gekennzeichnet, dass** sie einen Pressaufbau (26) umfasst, der ausgebildet ist, um die Lebensmittelsubstanz (4) in der Aufgusskammer (3) zu komprimieren, wobei der Pressaufbau (26) einen Presskörper (27) umfasst, welcher verschiebbar entlang der Längsachse (17) mit der Aufgusskammer (3) verbunden ist, um den Boden der Aufgusskammer (3) zu bestimmen; wobei der Presskörper (27) in der Lage ist, mit Hilfe von Anhebungs- und Absenkungsmitteln (29) in der Aufgusskammer (3) zu gleiten, um eine Abdichtung mit den Seitenwänden (28) der Aufgusskammer (3) zwischen einem oberen Totpunkt und einem unteren Totpunkt zu bilden; wobei der Presskörper (27) eine Verteilkammer (30) bildet, die hydraulisch mit dem hydraulischen Aufbau kommuniziert und auf der dem inneren Volumen der Aufgusskammer (3) zugewandten Seite durch eine perforierte Platte (31) verschlossen ist zwecks Ausströmens des Wassers in der Aufgusskammer (3) durch die Löcher der perforierten Platte (31); wobei die Anhebungs- und Absenkungsmittel (29) eine Schneckenschraube (32) umfassen, welche an einem ihrer Enden mit dem Presskörper (27) verbunden und mit einem motorisierten Innengewinde (33) verknüpft ist, welches integral in der Translation mit der Aufgusskammer (3) ist; wobei das motorisierte Innengewinde (33) kinematisch mit zweiten Motormitteln (34) verknüpft ist.

4. Die Ausgabemaschine (1) gemäß einem oder mehreren der obigen Ansprüche, **dadurch gekennzeichnet, dass** der Ausgabeaufbau (5) einen sekundären Rahmen (23) umfasst, der verschiebbar mit dem primären Rahmen (20) verbunden ist, entlang einer Richtung, die radial zu der Drehachse (16) ist, und den Tropfstoppverschluss (12) zwecks seiner Bewegung aus der offenen Position in die geschlossene Position und umgekehrt trägt.

5. Die Ausgabemaschine (1) gemäß einem oder mehreren der obigen Ansprüche, **dadurch gekennzeichnet, dass** die zweiten kinematischen Mittel (14) mindestens einen zweiten Antriebsstift (24) umfassen, der integral mit dem sekundären Rahmen (23) verbunden und für seinen Eingriff in ein zweites nockenartiges Profil (25) geformt ist, das an dem Antriebsrad (15) geformt ist; wobei das zweite nockenartige Profil (25) eine Form hat, die radial und in Umfangsrichtung mit Bezug auf die Drehachse (16) des Antriebsrades (15) veränderlich ist zwecks Bewegung des Tropfstoppverschlusses (12) aus der offenen Position in die geschlossene Position und umgekehrt.

6. Die Ausgabemaschine (1) gemäß einem oder mehreren der obigen Ansprüche, **dadurch gekennzeichnet, dass** der hydraulische Aufbau eine Hochdruckpumpe und eine Heizvorrichtung zum Befördern von heißem Wasser in die Aufgusskammer (3) umfasst.

## Revendications

1. Machine de distribution de boissons (I), en particulier du type comprenant un dispositif anti-goutte, comprenant:
- un groupe d'infusion (2) qui forme une chambre d'infusion (3), dans laquelle est disposée une substance alimentaire (4) à partir de laquelle obtenir une infusion;
- un groupe de distribution (5) qui est disposé de manière à fermer ladite chambre d'infusion (3) et qui peut se déplacer grâce à un premier moyen cinématique (6) entre une position de chargement et de déchargement, dans laquelle ledit ensemble de distribution (5) est éloigné de ladite chambre d'infusion (3) de manière à laisser libre accès à ladite chambre d'infusion (3), et une position de distribution, dans laquelle ledit ensemble de distribution (5) est disposé de manière à fermer ladite chambre d'infusion (3) ;
- un groupe hydraulique qui est relié hydrauliquement à ladite chambre d'infusion (3) pour envoyer de l'eau dans ladite chambre d'infusion (3) afin d'obtenir ladite infusion par le passage de ladite eau à travers ladite substance alimentaire;
ledit groupe de distribution (5) comprenant une buse de distribution (7), ladite machine de distribution de boissons (1) étant **caractérisée en ce que** la buse de distribution (7)
est pourvue d'une vanne à trois voies (8), dans laquelle une première voie (9) communique avec ladite chambre d'infusion (3), avec ledit groupe de distribution (5) disposé dans ladite position de distribution, une deuxième voie (10) communiquant avec ladite buse de distribution (7) et une troisième voie (11) communiquant avec l'air de l'environnement extérieur; ladite troisième voie (11) étant pourvue d'une fermeture anti-goutte (12) qui peut se déplacer grâce à un second moyen cinématique (14) entre une position ouverte, dans laquelle ladite troisième voie (11) est libre pour l'entrée d'air dans le circuit de distribution, et une position de fermeture, dans laquelle ladite troisième voie (11) est obstruée par ladite fermeture anti-goutte (12);
lesdits seconds moyens cinématiques (14) étant associés cinématiquement aux premiers moyens cinématiques (6) de manière à assurer un mouvement synchrone de ladite fermeture anti-goutte (12) avec ledit groupe de distribution (5) entre leurs positions respectives, ladite machine de distribution (1) comprenant une roue d'actionnement (15) qui est associée fonctionnellement aux premiers et seconds moyens cinématiques (14); ladite roue d'actionnement (15) disposant d'un axe de rotation (16) qui est sensiblement transversal à l'axe longitudinal (17) de ladite chambre d'infusion (3) et est associée aux premiers moyens moteurs (18), ledit groupe de distribution (5) comprenant un cadre primaire (20) qui est relié de manière rotative à ladite chambre d'infusion (3) autour dudit axe de rotation (16) de ladite roue d'actionnement pour le mouvement dudit groupe de distribution (5) de ladite position de chargement et de déchargement à ladite position de distribution et vice versa, lesdits premiers moyens cinématiques (6) comprennent au moins une première broche d'actionnement (21) qui est associé intégralement audit cadre primaire (20) et qui est façonné pour s'engager dans un premier profil en forme de came (22) fixé sur ladite roue d'actionnement (15); ledit premier profil en forme de came (22) ayant une forme qui est radialement et circonférentiellement variable par rapport audit axe de rotation (16) de ladite roue d'actionnement (15), avec une première partie qui est responsable du mouvement dudit ensemble de distribution (5) entre ladite position de chargement et de déchargement et une position intermédiaire, dans laquelle ledit groupe de distribution (5) est disposé au-dessus et à l'intérieur de ladite chambre d'infusion, et avec une deuxième partie qui est responsable du mouvement dudit groupe de distribution (5) entre ladite position intermédiaire et ladite position de distribution.

2. La machine de distribution de boissons (1), selon la revendication 1, **caractérisée en ce que** ladite machine de distribution (1) comprend en outre un groupe presseur (26) adapté pour comprimer ladite substance alimentaire (4) contenue dans ladite chambre d'infusion (3), ledit groupe presseur (26) comprenant un corps presseur (27) qui est associé de manière coulissante à ladite chambre d'infusion (3) le long dudit axe longitudinal (17) de manière à définir le fond de ladite chambre d'infusion (3); ledit corps presseur (27) pouvant coulisser dans ladite chambre d'infusion (3) de manière à former un joint avec les parois latérales (28) de ladite chambre d'infusion (3) entre un point mort haut et un point mort bas grâce à des moyens de levage et d'abaissement (29); ledit corps presseur (27) formant une chambre de distribution (30) qui communique hydrauliquement avec ledit groupe hydraulique et est fermée sur un côté orienté vers le volume interne de ladite chambre d'infusion (3) par une plaque perforée (31) pour l'écoulement de ladite eau dans ladite chambre d'infusion (3) à travers les trous de ladite plaque perforée (31), lesdits moyens de levage et d'abaissement (29) comprenant une vis sans fin (32) qui est associée, à l'une de ses extrémités, audit corps de presse (27) et est associée à un filetage femelle motorisé (33) qui est solidaire en translation de ladite chambre d'infusion (3); ledit filetage femelle motorisé (33) étant associé cinématiquement à un second moyen moteur (34).

3. La machine de distribution (1) selon la revendication 1, **caractérisée en ce qu'**elle comprend un groupe presseur (26) adapté pour comprimer ladite substance alimentaire (4) contenue dans ladite chambre d'infusion (3), ledit groupe presseur (26) comprenant un corps presseur (27) qui est associé de manière coulissante à ladite chambre d'infusion (3) le long dudit axe longitudinal (17) de manière à définir le fond de ladite chambre d'infusion (3); ledit corps presseur (27) pouvant coulisser dans ladite chambre d'infusion (3) de manière à former un joint avec les parois latérales (28) de ladite chambre d'infusion (3) entre un point mort haut et un point mort bas grâce à des moyens de levage et d'abaissement (29); ledit corps presseur (27) formant une chambre de distribution (30) qui communique hydrauliquement avec ledit groupe hydraulique et est fermée sur un côté orienté vers le volume interne de ladite chambre d'infusion (3) par une plaque perforée (31) pour l'écoulement de ladite eau dans ladite chambre d'infusion (3) à travers les trous de ladite plaque perforée (31), lesdits moyens de levage et d'abaissement (29) comprenant une vis sans fin (32) qui est associée, à l'une de ses extrémités, audit corps de presse (27) et est associée à un filetage femelle motorisé (33) qui est solidaire en translation de ladite chambre d'infusion (3); ledit filetage femelle motorisé (33) étant associé cinématiquement à un second moyen moteur (34).

4. La machine de distribution (1) selon l'une ou plusieurs des revendications précédentes **caractérisée en ce que** ledit groupe de distribution (5) comprend un cadre secondaire (23) qui est associé de manière coulissante audit cadre primaire (20), selon une direction radiale par rapport audit axe de rotation (16), et supporte ladite fermeture anti-goutte (12) pour son déplacement de ladite position ouverte à ladite position fermée et vice versa.

5. La machine de distribution (1) selon l'une ou plusieurs des revendications précédentes, **caractérisée en ce que** lesdits seconds moyens cinématiques (14) comprennent au moins une seconde broche d'actionnement (24) qui est intégralement associé audit cadre secondaire (23) et est façonné pour son engagement dans un second profil en forme de came (25) formé sur ladite roue d'actionnement (15) ledit second profil en forme de came (25) ayant une forme qui est radialement et circonférentiellement variable par rapport à l'axe de rotation (16) de ladite roue d'actionnement (15) pour le mouvement de ladite fermeture anti-gouttes (12) de ladite position ouverte à ladite position fermée et vice versa.

6. La machine de distribution (1) selon l'une ou plusieurs des revendications précédentes, **caractérisée par le fait que** le groupe hydraulique comprend une pompe à haute pression et un réchauffeur pour envoyer de l'eau chaude dans ladite chambre d'infusion (3).
